Europäisches Patentamt

European Patent Office

Office européen des brevets

(11) Veröffentlichungsnummer : **0 046 925
B1**

(12) **EUROPÄISCHE PATENTSCHRIFT**

(45) Veröffentlichungstag der Patentschrift :
**11.04.84**

(51) Int. Cl.³ : **C 01 B 25/41**, C 01 B 25/445,
C 01 B 25/39

(21) Anmeldenummer : **81106423.7**

(22) Anmeldetag : **19.08.81**

(54) **Verfahren zur Herstellung eines schnellöslichen Polyphosphatglases.**

(30) Priorität : **03.09.80 DE 3033065**

(43) Veröffentlichungstag der Anmeldung :
**10.03.82 Patentblatt 82/10**

(45) Bekanntmachung des Hinweises auf die Patenterteilung : **11.04.84 Patentblatt 84/15**

(84) Benannte Vertragsstaaten :
**AT BE CH DE FR GB IT LI NL SE**

(56) Entgegenhaltungen :
**DE-B- 1 097 963
DE-B- 2 139 817
DE-C- 900 338
FR-A- 1 118 829
US-A- 2 414 742
US-A- 2 569 936
US-A- 2 572 359**

(73) Patentinhaber : **Giulini Chemie GmbH
Giulinistrasse 2 Postfach 123
D-6700 Ludwigshafen/Rhein (DE)**

(72) Erfinder : **Förster, Hans-Joachim, Dr. Dipl.-Chem.
Osterweg 1
D-6830 Schwetzingen (DE)**
Erfinder : **Terasa, Otto
Langgewannstrasse 50
D-6720 Speyer (DE)**
Erfinder : **Egner, Manfred, Ing. (grad.)
Berlinerstrasse 7
D-6831 Brühl (DE)**

(74) Vertreter : **Benatzky, Erika, Dr.
Giulinistrasse 2
D-6700 Ludwigshafen/Rh. (DE)**

## Verfahren zur Herstellung eines schnellöslichen Polyphosphatglases

Gegenstand der vorliegenden Erfindung ist ein Verfahren zur Herstellung eines schnelllöslichen und gut rieselfähigen Alkalipolyphosphatglases mit niedrigem Schüttgewicht, durch mehrmalige Aufbringung von Alkalibicarbonatlösung auf feinvermahlenes Alkalipolyphosphatglas und jeweils daran anschließendes Wegtrocknen des aufgebrachten Wassers mittels Heißluft.

Glasige Alkalipolyphosphate, d. h. Schmelzgemische mittel- und langkettiger Alkalipolyphosphate, werden schon seit langem industriell eingesetzt, z. B. als Kalkbinde- und Wasserenthärtungsmittel, als Korrosionsschutzmittel, Hilfsmittel in der Textil- und Färbeindustrie sowie in der Milch-, Käse- und Fleischindustrie.

Ein Nachteil dieser Gläser liegt nun darin, daß sie stark hygroskopisch sind und an feuchter Luft zusammenkleben und zerfließen. Beim Auflösen in Wasser entstehen zähe Massen, die sich nur sehr langsam auflösen. Dies hat dazu geführt, daß zahlreiche Untersuchungen zur Verbesserung ihrer Eigenschaften durchgeführt worden sind. Auch sind bereits viele, in der Praxis mit mehr oder weniger Erfolg angewandte Lösungswege aufgezeigt worden. Hinsichtlich Löslichkeit und Lagerfähigkeit werden jedoch die bis jetzt erzielten Verbesserungen auf bestimmten Anwendungsbereichen noch nicht als ausreichend angesehen.

In der DE-C-900 338 wird beispielsweise vorgeschlagen, pulverförmige Polyphosphatgläser mit Wasser zu befeuchten und durch anschließende Erhitzung an der Oberfläche der Teilchen einen Überzug aus einer nicht hygroskopischen sauren Phosphatverbindung zu bilden. Gemäß einer besonderen Ausführungsweise können dem pulverförmigen Polyphosphatglas vor oder nach seiner verfahrensgemäßen Behandlung wasserlösliche, in Gegenwart von Wasser und den verfahrensgemäß entstandenen sauren Umwandlungsprodukten zur Gasentwicklung befähigte pulverförmige Stoffe, wie Natriumcarbonat und Natriumsulfit, in Mengen von 1 bis 20 % des Phosphatglases zugemischt werden.

Das beim Zusammenbringen des Pulvers mit Wasser entstehende Gas soll dann die einzelnen Polyphosphatteilchen unter gleichzeitiger Suspendierung in Wasser auseinandersprengen, so daß die Teilchen selbst ohne Rühren in kürzester Zeit in Lösung gehen sollen.

Gemäß einem weiteren Vorschlag in der DE-B-2 139 817 werden rasch lösliche und frei fließende Alkalipolyphosphatgläser in der Weise hergestellt, daß das Wasseraufbringen sowie das Wegtrocknen mehrmals hintereinander erfolgen, wobei jeweils maximal 2 Gew.-%, vorzugsweise weniger als 1,6 Gew.-% Wasser, bezogen auf das Glasgewicht, aufgebracht werden und die Heißlufttemperatur zwischen 50 und 120 °C, vorzugsweise zwischen 65 und 105 °C liegt. Auf diese Weise soll die beim Arbeiten gemäß der DE-C-903 338 beobachtete starke Hydrolyse des Polyphosphats verhindert werden. Auch sollen dadurch in den Apparateteilen zähklebrige Ablagerungen, die zu Verstopfungen und schließlich zum Betriebsstillstand führen können, verhütet werden. Insbesondere sollen die beim Eingießen in Wasser zu beobachtenden Verklumpungen und beim offenen Stehen bei mäßigeren Luftfeuchtigkeiten zu beobachtenden Zusammenbackungen vermieden werden.

Wie bereits erwähnt worden ist, sind jedoch die Eigenschaften der nach bekannten Verfahren hergestellten Polyphosphatgläser auf manchen Arbeitsgebieten noch nicht zufriedenstellend. Beispielsweise wird nunmehr auch bei rasch löslichen Alkalipolyphosphatgläsern ein niedriges Schüttgewicht verlangt.

Aufgabe der vorliegenden Erfindung ist daher die Herstellung frei fließender und rasch löslicher Alkalipolyphosphatgläser mit niedrigem Schüttgewicht.

Die gestellte Aufgabe kann überraschend in einfacher Weise mit einem Verfahren gelöst werden, bei welchem in einem Wirbelbett mehrmals hintereinander eine wäßrige Salzlösung auf feingemahlenes Polyphosphatglas aufgebracht und das damit eingeschleppte Wasser jeweils teilweise oder vollständig durch Wegtrocknen mit Heißluft entfernt wird. Das Verfahren ist dadurch gekennzeichnet, daß einewäßrige Alkalibicarbonatlösung, insbesondere Natriumbicarbonatlösung, auf Polyphosphatglasteilchen, die bei der Siebanalyse auf 200 μm maximal einen Rückstand von 1 % ergeben, aufgesprüht wird und das aufgebrachte Wasser mit Heißluft bei einer Temperatur größer als 120 °C, insbesondere Heißluft mit einer Temperatur von 125-135 °C, auf eine Restfeuchte kleiner 0,2 Gew.-% abgetrocknet wird, wobei die insgesamt eingebrachte Wassermenge in Abhängigkeit vom pH-Wert des Alkalipolyphosphatglases bei maximal 8 Gew.-% und die insgesamt eingebrachte Alkalibicarbonatmenge bei maximal 1 Gew.-% liegt, jeweils bezogen auf das Alkalipolyphosphatglas.

Zweckmäßigerweise wird so gearbeitet, daß auf Polyphosphatgläser mit einem pH-Wert kleiner 7 maximal 5 % Wasser aufgebracht werden und auf Polyphosphatgläser mit einem pH-Wert > 7 maximal 8 % Wasser. Die Konzentration der Alkalibicarbonatlösung sollte zwischen 2 und 7 Gewichtsprozent liegen, beträgt jedoch vorteilhafterweise 4,5 bis 5,5 %.

Ein wesentliches Kennzeichen des neuen Verfahrens wird darin gesehen, daß als Ausgangsstoff extrem feingemahlene Polyphosphatgläser eingesetzt werden. Liegt der Rückstand bei der Siebanalyse auf 200 μm bei etwa 20 %, so wird zwar das Schüttgewicht beträchtlich erniedrigt, jedoch Lösegeschwindigkeit und hygroskopisches Verhalten werden nur unzureichend verbessert, wie anhand der Beispiele 1 und 2 noch gezeigt wird. Aus Beispiel 1 geht weiterhin hervor, daß bei Aufsprühen von Wasser anstelle von Natriumbicarbonatlösung wesentlich schlechtere Ergebnisse erzielt werden.

Das Verfahren der vorliegenden Anmeldung kann sowohl chargenweise als auch kontinuierlich in einem Wirbelschichtofen ausgeführt werden. In den Beispielen wurde ein Wirbelschichtofen verwendet, der oberhalb des Anströmbodens mit einem Rührwerk ausgerüstet ist. Zur Erzeugung der Wirbelschicht wurden jeweils 30 m³ Luft/kg/h Polyphosphatglas eingeblasen. Die Lufttemperatur betrug 130 °C.

Die Schichtdicke des Polyphosphatglases in Ruhestellung betrug 60 mm. Die Natriumbicarbonatlösung wurde über mehrere Düsen mit einer Gesamtleistung von 45 ml/Min. bei 4 bar eingedüst. Berechnet auf eingesetztes Polyphosphatglas wurden insgesamt 5-8 % Bicarbonatlösung eingedüst, und zwar in 5 Intervallen. Nach Verdüsung der Bicarbonatlösung erfolgte jeweils eine Trocknung auf 0,2 % Restfeuchte. Das Endprodukt wurde auf seine Löseeigenschaften, Hygroskopizität, Schüttgewicht und Restfeuchte untersucht.

Die Untersuchungen wurden unter folgenden Bedingungen durchgeführt :

### Lösegeschwindigkeit

In einem 1 l-Becherglas (hohe Form) wird in 1 l destilliertem Wasser 30 g der zu prüfenden Substanz über einen Trichter 8 cm über Becherglasrand eingetragen. Nach 5 Min. Standzeit wird mit einem Rührer in L-Form, Länge insgesamt 20 cm, Durchmesser 6 mm, mit einer Flügellänge von 1 cm, mit 1 500 UpM gerührt. Der Abstand vom Glasboden zu Rührflügel beträgt 3 cm. Die Wassertemperatur wird konstant auf 20 °C gehalten. Die Lösezeit wird gemessen vom Zeitpunkt des Eintragens bis zur vollständigen Lösung und in Sekunden angegeben.

### Hygroskopizitätstest

20 g Material werden in einem ungefütterten Briefumschlag 4 Std. in eine Kammer mit einer relativen Luftfeuchtigkeit von 95 % eingehängt. Nach 4 Stunden wird der Inhalt des Umschlages über ein 2 mm Sieb bei leichter Rüttelbewegung abgesiebt. Der auf dem Sieb verbleibende Rückstand wird gewogen und in Prozent verbackenes Material angegeben.

### Schüttgewicht

Das Schüttgewicht wird durch loses Einschütten über einen Trichter in einem 100 ml Meßzylinder ermittelt.

### Restfeuchte

Die Restfeuchte wird ermittelt durch Trocknen des Materials bei 105 °C.

### Ausgangsmaterial

| | |
|---|---|
| Löseeigenschaft | 600 Sek. |
| Hygroskopizität | 100 % Verbackung |
| Schüttgewicht | 1,15 kg/l |

### Beispiel 1 (Vergleich)

5 kg Natriumhexametaphosphat mit einem pH-Wert von 6,2, gemessen in 1 %iger Lösung, und einem Grobanteil von 19 % > 200 μm wurden in oben beschriebener Apparatur mit Wasser behandelt. Das so instantisierte Material hatte eine

| | |
|---|---|
| Lösezeit | 540 Sek. |
| Hygroskopizität | 90 % Verbackung |
| Schüttgewicht | 1,1 kg/l |
| Restfeuchte | 0,18 % |

### Beispiel 2 (Vergleich)

Wie Beispiel 1, nur anstelle von Wasser wurde eine 5 %ige Natriumbikarbonatlösung aufgesprüht.

| | |
|---|---|
| Lösezeit | 450 Sek. |
| Hygroskopizität | 80 % Verbackung |
| Schüttgewicht | 700 g/l |
| Restfeuchte | 0,2 % |

### Beispiel 3

Wie Beispiel 2, nur wurde das Ausgangsmaterial so vermahlen, daß auf 200 μm ein Rückstand von maximal 1 % verblieb.

**0 046 925**

| | |
|---|---|
| Lösezeit | 250 Sek. |
| Hygroskopizität | 30 % Verbackung |
| Schüttgewicht | 640 g/l |
| Restfeuchte | 0,25 % |

### Beispiel 4 (Vergleich)

Wie Beispiel 3, nur anstelle von Hexametaphosphat wurde ein Tetrapolyphosphat mit pH 8,1 eingesetzt und in 5 Intervallen insgesamt 8 % Wasser aufgesprüht.

| | |
|---|---|
| Lösezeit | 260 Sek. |
| Hygroskopizität | 100 % Verbackung |
| Schüttgewicht | 690 g/l |
| Restfeuchte | 0,1 % |

### Beispiel 5

Wie Beispiel 4, nur anstelle von Wasser wurde eine 5 %ige Natriumbikarbonatlösung aufgesprüht.

| | |
|---|---|
| Lösezeit | 210 Sek. |
| Hygroskopizität | 50 % Verbackung |
| Schüttgewicht | 530 g/l |
| Restfeuchte | 0,13 % |

### Beispiel 6

Wie Beispiel 3, nur wurde anstelle eines Hexametaphosphats mit pH-Wert von 6,2 ein saures Hexametaphosphat mit einem pH-Wert von 4,4 mit einer 1 %igen Natriumbikarbonatlösung besprüht.

| | |
|---|---|
| Lösezeit | 250 Sek. |
| Hygroskopizität | 35 % Verbackung |
| Schüttgewicht | 650 g/l |
| Restfeuchte | 0,38 % |

**Ansprüche**

1. Verfahren zur Herstellung eines schnellöslichen und gut rieselfähigen Alkalipolyphosphatglases mit niedrigem Schüttgewicht durch wiederholtes Aufbringen von Wasser auf feingemahlenes Polyphosphatglas und jeweils daran anschließendes teilweises oder vollständiges Wegtrocknen des aufgebrachten Wassers mit Heißluft im Wirbelbett, dadurch gekennzeichnet, daß jeweils eine wäßrige Alkalibicarbonatlösung, insbesondere Natriumbicarbonatlösung, auf Polyphosphatglasteilchen, die bei der Siebanalyse auf 200 µm maximal einen Rückstand von 1 % ergeben, aufgesprüht wird, das aufgebrachte Wasser mit Heißluft bei einer Temperatur größer 120 °C, insbesondere Heißluft mit einer Temperatur von 125 bis 135 °C, auf eine Restfeuchte kleiner 0,2 Gew.-% abgetrocknet wird, wobei die insgesamt eingebrachte Wassermenge in Abhängigkeit vom pH-Wert des Alkalipolyphosphatglases bei maximal 8 Gew.-% und die insgesamt eingebrachte Alkalibicarbonatmenge bei maximal 1 Gew.-% liegt, jeweils bezogen auf das Alkalipolyphosphatglas.

2. Verfahren nach Anspruch 1, dadurch gekennzeichnet, daß bei einem Polyphosphatglas mit einem pH-Wert kleiner als 7 maximal 5 % Wasser und bei einem Polyphosphatglas mit einem pH-Wert größer als 7 maximal 8 Gew.-% Wasser aufgesprüht werden.

3. Verfahren nach den Ansprüchen 1 und 2, dadurch gekennzeichnet, daß eine 2 bis 7 %ige, insbesondere 4,5 bis 5,5 %ige Natriumbicarbonatlösung, aufgesprüht wird.

4. Verfahren nach den Ansprüchen 1 bis 3, dadurch gekennzeichnet, daß die Aufsprühung der Natriumbicarbonatlösung und Wegtrocknung des Wassers 5 bis 7mal erfolgt.

5. Verfahren nach den Ansprüchen 1 bis 4, dadurch gekennzeichnet, daß Aufsprühung und Wegtrocknung des Wassers kontinuierlich oder chargenweise erfolgen.

**Claims**

1. Process for producing a rapidly soluble and freely pourable alkali polyphosphate glass with a low bulk weight by repeatedly applying water to finely ground polyphosphate glass and by subsequently drying the applied water away partially or completely by means of hot air in a fluidised bed, characterised

4

in that an aqueous alkali bicarbonate solution, especially a sodium bicarbonate solution, is sprayed onto polyphosphate glass particles which produce a residue of 1 % in a screen analysis to a maximum of 200 mm, the applied water is dried off to a residual moisture of less than 0.2 % by weight by means of hot air at a temperature above 120 °C, especially hot air at a temperature of 125 to 135 °C, and the total quantity of water introduced is a maximum of 8 % by weight, as a function of the pH value of the alkali polyphosphate glass, and the total quantity of alkali bicarbonate introduced is a maximum of 1 % by weight, each in relation to the alkali polyphosphate glass.

2. Process according to Claim 1, characterised in that with a polyphosphate glass having a pH value less than 7 a maximum of 5 % water and with a polyphosphate glass having a pH value greater than 7 a maximum of 8 % by weight of water is sprayed on.

3. Process according to Claims 1 and 2, characterised in that a 2 to 7 %, especially a 4.5 to 5.5 % sodium bicarbonate solution is sprayed on.

4. Process according to Claims 1 to 3, characterised in that the sodium bicarbonate solution is sprayed on and the water dried away 5 to 7 times.

5. Process according to Claims 1 to 4, characterised in that the water is sprayed on and dried away continuously or batchwise.


**Revendications**

1. Procédé de production d'un verre de polyphosphate alcalin rapidement soluble et bien fluide présentant un faible poids de matière déversée non tassée, par l'apport répétée d'eau sur du verre de polyphosphate finement moulu et le séchage subséquent et répété, partiel ou total, de l'eau au moyen d'air chaud dans un lit fluidisé, caractérisé par le fait que chaque fois une solution aqueuse de bicarbonate alcalin, en particulier une solution de bicarbonate de sodium, est giclée sur des particules de verre de polyphosphate donnant au maximum un résidu de 1 % à l'analyse granulométrique à 200 μm, que l'eau est séchée au moyen d'air chaud à une température supérieure à 120 °C, en particulier de l'air chaud à une température de 125 à 135 °C, jusqu'à une humidité résiduelle inférieure à 0,2 % en poids, l'apport total d'eau en fonction du pH du verre de polyphosphate alcalin étant d'environ 8 % en poids au maximum et la quantité totale de bicarbonate alcalin utilisée étant au maximum d'environ 1 % en poids, chaque fois relativement au verre de polyphosphate alcalin.

2. Procédé selon la revendication 1, caractérisé en ce que pour un verre de polyphosphate avec un pH inférieur à 7 on gicle au maximum 5 % d'eau en poids et pour un verre de polyphosphate avec un pH supérieur à 7 on gicle au maximum 8 % d'eau en poids.

3. Procédé selon les revendications 1 et 2, caractérisé en ce qu'on gicle une solution de carbonate de sodium de 2 à 7 %, en particulier 4,5 à 5,5 %.

4. Procédé selon les revendications 1 à 3, caractérisé en ce que l'aspersion au moyen de la solution de bicarbonate de sodium et le séchage de l'eau ont lieu 5 à 7 fois.

5. Procédé selon les revendications 1 à 4, caractérisé en ce que l'aspersion et le séchage de l'eau ont lieu continuellement ou par charges.